# FASCICULE DE BREVET EUROPEEN

(11) **EP 1 868 871 B1**
(45) Date de publication et mention de la délivrance du brevet: **04.07.2012**
(21) Numéro de dépôt: 06743588.3
(22) Date de dépôt: 16.03.2006
(51) Int. Cl.: B62D 25/14

(54) **STRUCTURE DE RENFORT POUR VEHICULE AUTOMOBILE APTE A LIMITER LES VIBRATIONS DE TABLEAU DE BORD, ET VEHICULE AUTOMOBILE CORRESPONDANT**
VERSTÄRKUNGSSTRUKTUR FÜR EIN KRAFTFAHRZEUG ZUR BEGRENZUNG VON VIBRATIONEN DES ARMATURENBRETTS UND ENTSPRECHENDES KRAFTFAHRZEUG
REINFORCING STRUCTURE FOR MOTOR VEHICLE CAPABLE OF LIMITING INSTRUMENT PANEL VIBRATIONS, AND CORRESPONDING MOTOR VEHICLE

(30) Priorité: 06.04.2005 FR 0503449
(43) Date de publication de la demande: 26.12.2007
(73) Titulaire: Faurecia Interieur Industrie, 92000 Nanterre (FR)
(72) Inventeur: BAUDART, Laurent, F-60530 Fresnoy En Thelle (FR)
(74) Mandataire: Domenego, Bertrand
(86) Numéro de dépôt international: PCT/FR2006/000590
(87) Numéro de publication internationale: WO 2006/106197

(56) Documents cités:
- EP-A- 1 298 035
- DE-A1- 10 101 648
- DE-A1- 10 152 242
- FR-A- 2 859 445

## Description

La présente invention concerne une structure de renfort de véhicule automobile, comprenant une traverse de tableau de bord fixée par ses extrémités aux montants avant gauche et droit du véhicule, et un tube creux ayant une longueur sensiblement inférieure à la traverse de tableau de bord et sensiblement parallèle à la traverse de tableau de bord, ledit tube creux étant fixé à une partie d'extrémité de la traverse de tableau de bord. Le tube creux est fixé rigidement d'une part à la traverse de tableau de bord par un premier et un second éléments de liaison de façon à former un quadrilatère avec celle-ci, et, d'autre part, par son extrémité proche de l'extrémité de la traverse de tableau de bord, au montant adjacent du véhicule par un élément de traction inscrit dans la section transversale dudit tube creux.

FR A 2 853 878 et EP1298035 décrivent une structure de renfort du type précité.

Une telle structure de renfort doit être fixée à la traverse inférieure de baie pour permettre un amortissement des vibrations acceptable pour le confort des occupants du véhicule.

Le but de l'invention est donc d'obtenir une structure de renfort ayant un amortissement des vibrations acceptable pour un coût réduit.

L'objet de l'invention est donc une structure de renfort de véhicule automobile, comprenant une traverse de tableau de bord fixée par ses extrémités aux montants avant gauche et droit du véhicule, et un tube creux ayant une longueur sensiblement inférieure à la traverse de tableau de bord et sensiblement parallèle à la traverse de tableau de bord, ledit tube creux étant fixé à une partie d'extrémité de la traverse de tableau de bord. Le tube creux est fixé rigidement d'une part à la traverse de tableau de bord par un premier et un second éléments de liaison de façon à former un quadrilatère avec celle-ci, et, d'autre part, par son extrémité proche de l'extrémité de la traverse de tableau de bord, au montant adjacent du véhicule par un élément de traction inscrit dans la section transversale dudit tube creux.

D'autres caractéristiques de l'invention sont :
- l'élément de traction est un élément fileté dont l'axe est parallèle à l'axe du tube creux ;
- le quadrilatère est sensiblement un rectangle ;
- elle comporte en outre une pièce de liaison du tube creux à la traverse inférieure de baie, fixée de façon démontable au tube creux ;
- la pièce de liaison est fixée au tube creux par au moins un élément fileté ;
- la pièce de liaison comporte à son extrémité de fixation au tube creux, au moins une pièce d'appui rigide comportant un trou de passage de l'élément fileté ; et le tube creux comporte au moins une pièce de fixation comportant une surface d'appui de la pièce d'appui et munie d'un orifice taraudé de réception de l'élément fileté ;
- la pièce d'appui est une boîte constituée par une tôle pliée comportant deux faces parallèles ;
- chaque pièce de fixation est constituée par une tôle pliée munie d'un écrou fixé solidairement à la pièce de fixation, à l'opposé de la pièce de liaison, par rapport à la surface d'appui ; et
- la pièce d'appui comporte sur sa face opposée à la pièce de fixation, et sensiblement sur l'axe dudit passage, un écrou flottant maintenu par des attaches contre ladite pièce d'appui.

L'invention a également pour objet un véhicule automobile équipé d'une structure de renfort telle que définie ci-dessus.

L'invention sera mieux comprise à la lecture de la description qui va suivre, donnée uniquement à titre d'exemple, et faite en se référant aux dessins en annexe dans lesquels :
- la figure 1 est une vue en perspective de la structure de renfort selon l'invention ;
- la figure 2 est une vue en perspective du système d'attache de la structure de renfort au montant avant gauche du véhicule ;
- la figure 3 est une vue de côté de la structure de renfort et de sa pièce de liaison avec la traverse inférieure de baie ;
- la figure 4 est une vue en coupe d'un premier mode de réalisation de la liaison entre la pièce de liaison de la figure 3 et la structure de renfort ; et
- la figure 5 est une vue en coupe d'un second mode de réalisation de la liaison entre la pièce de liaison de la figure 3 et la structure de renfort.

Dans tout ce qui suit, les orientations utilisées sont les orientations habituelles d'un véhicule automobile. Ainsi, les termes « avant », « arrière », « droite » et « gauche » s'entendent par rapport au sens de marche du véhicule et à la position du conducteur. De plus, les directions x, y et z sont les directions longitudinale, transversale et verticale du véhicule.

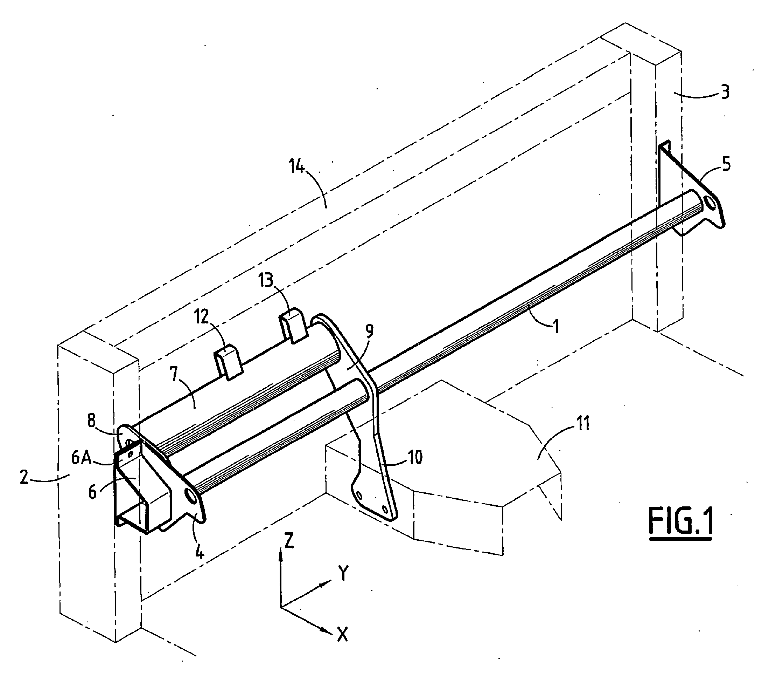

En référence à la figure 1, une structure de renfort est représentée en perspective, l'observateur se trouvant à l'arrière gauche du véhicule et regardant vers l'avant. Les éléments de la caisse du véhicule entourant la structure de renfort sont représentés en trait fantôme.

La structure de renfort comprend une traverse du tableau de bord 1 fixée entre les montants avant gauche 2 et droit 3 du véhicule par deux pièces en L 4, 5 renforcées chacune par un étrier 6 (seul l'étrier de gauche est représenté). Chaque ensemble 4 à 6 comporte un rebord 6A fixé au montant associé par des vis orientées en x

Un tube creux 7 ayant une longueur sensiblement inférieure à la traverse du tableau de bord 1 est monté sensiblement parallèle et à l'avant de celle-ci.

Le tube creux 7 est fixé rigidement à une partie d'extrémité de la traverse de tableau de bord 1 par deux flasques 8, 9 formant éléments de liaison.

La traverse du tableau de bord 1, le tube creux 7 et les deux flasques 8, 9 forment un quadrilatère. Ce quadrilatère est préférentiellement un rectangle.

Une jambe 10, intégrée ou non au flasque 9, fait la liaison entre ce flasque et le tunnel 11 de caisse, auquel il est fixé rigidement par des vis orientées en y. La jambe 10 participe ainsi à la rigidité de l'ensemble.

Deux pièces de fixation 12 et 13, dont le rôle sera expliqué ci-après, sont soudées sur le sommet du tube creux 7.

La traverse inférieure de baie 14 est positionnée à l'avant de la structure constituée de la traverse du tableau de bord 1 et du tube creux 7 et est également fixée rigidement aux deux montants avants 2, 3 de la caisse.

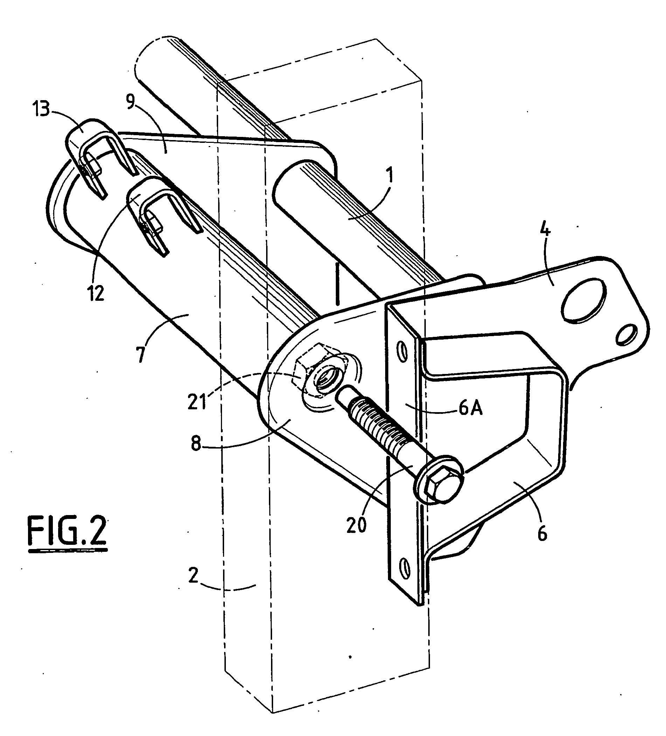

En outre, une vis 20, figure 2, traverse le montant 2 et le flasque 8 et vient se visser dans un écrou 21 solidaire intérieurement du tube creux 7, de telle sorte que l'axe de la vis 20 est parallèle à l'axe du tube creux 7 et s'inscrit dans la section transversale de celui-ci.

La vis 20, orientée en y, crée ainsi une liaison rigide entre le montant 2 et le tube creux 7.

Cette liaison rigide permet de réduire avantageusement les vibrations de la structure de renfort et donc du tableau de bord lui-même.

Ainsi, la demanderesse a constaté que, pour des véhicules et des motorisations courantes, il n'était plus nécessaire de prévoir une liaison mécanique rigide entre la structure de renfort et la traverse inférieure de baie 14.

Le remplacement de cette liaison mécanique par un simple élément fileté 20 permet ainsi une économie de coût particulièrement avantageuse.

De plus, cette liaison rigide permet également de diminuer la quantité de matière utilisée dans la structure de renfort, ce qui crée une économie sur le coût et le poids des matières utilisées.

Cependant, la demanderesse a également constaté que des moteurs de taille importante, tels que des moteurs V6, génèrent des vibrations que la structure ci-dessus n'est pas capable d'amortir suffisamment et nécessitent donc le maintien d'une liaison mécanique rigide avec la traverse inférieure de baie 14.

Cette constatation étant faite seulement pour certains moteurs, représentant en général un faible pourcentage de l'ensemble des moteurs équipant un type de véhicule donné, il est avantageux, pour un type de véhicule donné sur lequel est installé plusieurs motorisations, de prévoir une fixation mécanique optionnelle montée seulement quand c'est nécessaire. Cela permet avantageusement de réduire les coûts.

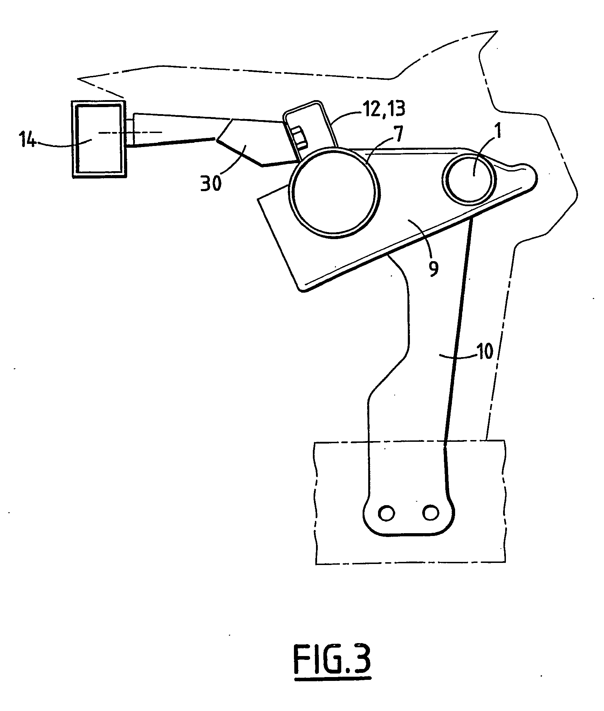

Une pièce de liaison 30, figure 3, est fixée classiquement de façon rigide à la traverse inférieure de baie 14 et compose deux extrémités arrières dont chacune est vissée au tube creux 7 par l'intermédiaire de l'une des pièces de fixation 12, 13.

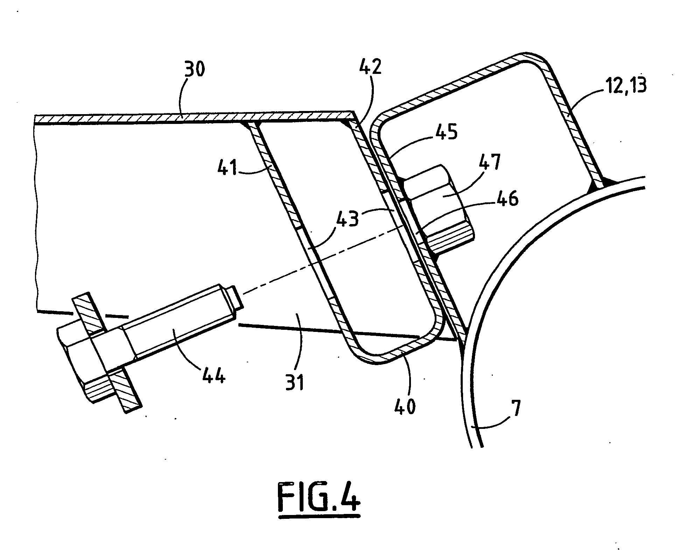

La pièce de liaison 30 comporte, figure 4, une partie d'extrémité 31 en forme de U proche des pièces de fixation 12, 13. Une tôle pliée 40 est soudée à l'intérieur de cette partie d'extrémité de façon à créer une boîte rigide formant pièce d'appui.

De façon préférentielle, la tôle est pliée de telle sorte qu'elle forme deux faces parallèles 41, 42.

Ces deux faces parallèles 41, 42 sont percées chacune d'un trou 43 permettant le passage d'une vis 44.

Soudées au tube creux 7, les pièces de fixation 12, 13 sont préférentiellement composées d'une tôle pliée comportant une face 45 percée d'un trou 46 permettant le passage de la vis 44 et munie d'un écrou 47 fixé solidairement à la face 45, à l'opposé, par rapport à la surface d'appui 45, de la pièce de liaison 30.

La vis 44, en se vissant dans l'écrou 47 de chaque pièce de fixation 12, 13, solidarise la pièce d'appui 40 et chaque pièce de fixation 12, 13, les surfaces 42, 45 étant appliquées l'une contre l'autre.

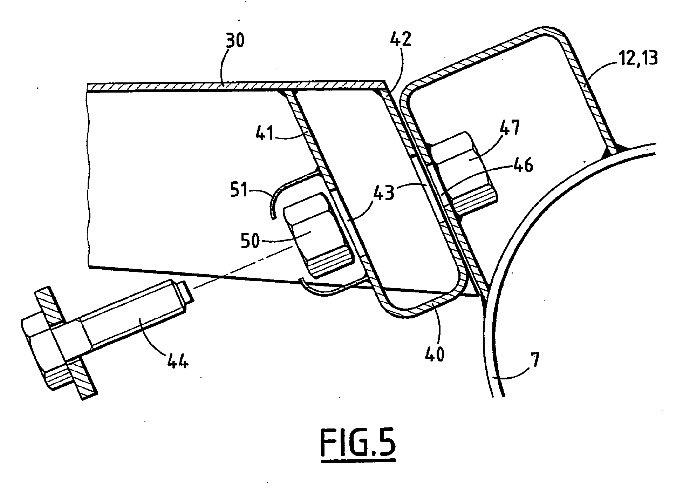

Dans une variante de réalisation, figure 5, la pièce d'appui 40 comporte, sur sa face 41 opposée à la pièce de fixation 12, 13, et sensiblement sur l'axe du passage de l'élément fileté 44, un écrou flottant 50 maintenu par des attaches 51 contre la pièce d'appui 40.

Cette variante permet avantageusement d'absorber des tolérances de montage plus importantes.

## Revendications

1. Structure de renfort de véhicule automobile, comprenant une traverse de tableau de bord (1) fixée par ses extrémités aux montants (2, 3) avant gauche et droit du véhicule, et un tube creux (7) ayant une longueur sensiblement inférieure à la traverse de tableau de bord (1) et sensiblement parallèle à la traverse de tableau de bord, ledit tube creux (7) étant fixé à une partie d'extrémité de la traverse de tableau de bord (1), **caractérisée en ce que** le tube creux (7) est fixé rigidement d'une part à la traverse de tableau de bord par un premier et un second éléments (8, 9) de liaison de façon à former un quadrilatère avec celle-ci, et, d'autre part, par son extrémité proche de l'extrémité de la traverse de tableau de bord (1), au montant (2) adjacent du véhicule par un élément de traction (20) inscrit dans la section transversale dudit tube creux.

2. Structure de renfort suivant la revendication 1, **caractérisé en ce que** l'élément de traction (20) est un élément fileté dont l'axe est parallèle à l'axe du tube creux (7).

3. Structure de renfort selon la revendication 1 ou 2, **caractérisée en ce que** le quadrilatère est sensiblement un rectangle.

4. Structure de renfort selon l'une quelconque des revendications 1 à 3, **caractérisée en ce qu'**elle comporte en outre une pièce de liaison (30) du tube creux (7) à la traverse inférieure de baie (14), fixée de façon démontable au tube creux.

5. Structure de renfort selon la revendication 4, **caractérisée en ce que** la pièce de liaison (30) est fixée au tube creux (7) par au moins un élément fileté (44).

6. Structure de renfort selon la revendication 5, **caractérisée en ce que** la pièce de liaison (30) comporte à son extrémité de fixation au tube creux (7), au moins une pièce d'appui rigide (40) comportant un trou de passage (43) de l'élément fileté (44) ; et le tube creux (7) comporte au moins une pièce de fixation (12, 13) comportant une surface d'appui (45) de la pièce d'appui (40) et munie d'un orifice taraudé (47) de réception de l'élément fileté (44).

7. Structure de renfort selon la revendication 6, **caractérisée en ce que** la pièce d'appui (40) est une boîte constituée par une tôle pliée comportant deux faces parallèles (41, 42).

8. Structure de renfort selon la revendication 6 ou la revendication 7, **caractérisée en ce que** chaque pièce de fixation (12, 13) est constituée par une tôle pliée munie d'un écrou (47) fixé solidairement à la pièce de fixation, à l'opposé de la pièce de liaison (30), par rapport à la surface d'appui (45).

9. Structure de renfort selon l'une quelconque des revendications 6 à 8, **caractérisée en ce que** la pièce d'appui (40) comporte sur sa face opposée à la pièce de fixation (12, 13), et sensiblement sur l'axe dudit passage, un écrou flottant (50) maintenu par des attaches (51) contre ladite pièce d'appui.

10. Véhicule automobile, **caractérisé en ce qu'**il comprend une structure de renfort suivant l'une quelconque des revendications 1 à 9.

## Claims

1. Reinforcing structure for a motor vehicle, comprising a dashboard cross-member (1) which is fixed with the ends thereof to the front left and front right pillars (2, 3) of the vehicle, and a hollow tube (7) which has a length which is substantially less than that of the dashboard cross-member (1) and which is substantially parallel with the dashboard cross-member, the hollow tube (7) being fixed to an end portion of the dashboard cross-member (1), **characterised in that** the hollow tube (7) is rigidly fixed on the one hand to the dashboard cross-member by a first and a second connection element (8, 9) so as to form a quadrilateral therewith and, on the other hand, with the end thereof close to the end of the dashboard cross-member (1), to the adjacent pillar (2) of the vehicle by means of a traction element (20) which is provided in the cross-section of the hollow tube.

2. Reinforcing structure according to claim 1, **characterised in that** the traction element (20) is a threaded element whose axis is parallel with the axis of the hollow tube (7).

3. Reinforcing structure according to claim 1 or 2, **characterised in that** the quadrilateral is substantially a rectangle.

4. Reinforcing structure according to any one of claims 1 to 3, **characterised in that** it further comprises a member (30) for connecting the hollow tube (7) to the lower windscreen cross-member (14) which member is fixed to the hollow tube in a detachable manner.

5. Reinforcing structure according to claim 4, **characterised in that** the connection member (30) is fixed to the hollow tube (7) by means of at least one threaded element (44).

6. Reinforcing structure according to claim 5, **characterised in that** the connection member (30) comprises, at the end thereof for fixing to the hollow tube (7), at least one rigid support member (40) which comprises a through-hole (43) for the threaded element (44) ; and the hollow tube (7) comprises at least one fixing member (12, 13) which comprises a support surface (45) for the support member (40) and which is provided with a tapped hole (47) for receiving the threaded element (44).

7. Reinforcing structure according to claim 6, **characterised in that** the support member (40) is a casing which is constituted by a folded sheet comprising two parallel faces (41, 42).

8. Reinforcing structure according to claim G or claim 7, **characterised in that** each fixing member (12, 13) is constituted by a folded sheet which is provided with a nut (47) which is fixedly joined to the fixing member, remote from the connection member (30), relative to the support surface (45).

9. Reinforcing structure according to any one of claims 6 to 8, **characterised in that** the support member (40) comprises, on the face thereof remote from the fixing member (12, 13), and substantially in the axis of the passage, a floating nut (50) which is retained against the support member by means of attachments (51).

10. Motor vehicle, **characterised in that** it comprises a reinforcing structure according to any one of claims 1 to 9.

## Patentansprüche

1. Verstärkungsstruktur für ein Kraftfahrzeug, mit einem Armaturenbrett-Querträger (1), der mit seinen Enden an der linken und rechten Vordersäule (2,3) des Fahrzeugs befestigt ist, und mit einem Hohlrohr (7) einer Länge, die wesentlich kleiner ist als die Länge des Armaturenbretts (1) und im Wesentlichen parallel zum Armaturenbrett-Querträger ist, wobei das Hohlrohr (7) an einem Endabschnitt des Armaturenbrett-Querträgers befestigt ist, **dadurch gekennzeichnet, dass** das Hohlrohr (7) starr befestigt ist
einerseits an dem Armaturenbrett-Querträger mit Hilfe eines ersten und zweiten Verbindungselements (8,9) unter Bildung eines Trapezoids und
andererseits an der angrenzenden Fahrzeugsäule (2) mit demjenigen Ende, das sich nahe an dem Ende des Armaturenbrett-Querträgers (1) befindet, mit Hilfe eines in den Querschnitt des Hohlrohrs einbeschriebenen Zugelements (20).

2. Verstärkungsstruktur nach Anspruch 1, **dadurch gekennzeichnet, dass** das Zugelement (20) ein Schraubenelement ist, dessen Achse parallel zur Achse des Hohlrohrs (7) ist.

3. Verstärkungsstruktur nach Anspruch 1 oder 2, **dadurch gekennzeichnet, dass** das Trapezoid im Wesentlichen ein Rechteck ist.

4. Verstärkungsstruktur nach einem der Ansprüche 1 bis 3, **dadurch gekennzeichnet, dass** sie außerdem ein lösbar an dem Hohlrohr angebrachtes Verbindungsstück (30) zum Verbinden des Hohlrohrs (7) mit dem unteren Rahmenquerträger (14) aufweist.

5. Verstärkungsstruktur nach Anspruch 4, **dadurch gekennzeichnet, dass** das Verbindungsstück (30) über mindestens ein Schraubenelement (44) an dem Hohlrohr (7) befestigt ist.

6. Verstärkungsstruktur nach Anspruch 5, **dadurch gekennzeichnet, dass** das Verbindungsstück (30) an demjenigen Ende, an dem es an dem Hohlrohr (7) befestigt ist, mindestens ein starres Haltestück (40) aufweist, das ein Durchgangsloch (43) für das Schraubenelement (44) aufweist; und dass das Hohlrohr (7) mindestens ein Befestigungsstück (12, 13) aufweist, das eine Haltefläche (45) für das Haltestück (40) aufweist und das mit einer mit Innengewinde versehenen Öffnung (47) zur Aufnahme des Schraubenelements (44) versehen ist.

7. Verstärkungsstruktur nach Anspruch 6, **dadurch gekennzeichnet, dass** das Haltestück (40) ein aus einem gebogenen Blech gebildeter Kasten mit zwei parallelen Flächen (41,42) ist.

8. Verstärkungsstruktur nach Anspruch 6 oder Anspruch 7, **dadurch gekennzeichnet, dass** jedes Befestigungsstück (12,13) aus einem gebogenen Blech gebildet ist, das an der Seite, die dem Verbindungsstück (30) bezüglich der Haltefläche (45) gegenüberliegt, mit einer Schraubenmutter (47) versehen ist, die fest mit dem Befestigungsstück verbunden ist.

9. Verstärkungsstruktur nach einem der Ansprüche 6 bis 8, **dadurch gekennzeichnet, dass** das Haltestück (40) an seiner Fläche, die dem Befestigungsstück (12,13) gegenüberliegt, und im Wesentlichen in der Achse des Durchgangs eine frei bewegliche Schraubenmutter (50) aufweist, die mit Hilfe von Halterungen (51) gegen das Haltestück gehalten wird.

10. Kraftfahrzeug, **dadurch gekennzeichnet, dass** es eine Verstärkungsstruktur nach einem der Ansprüche 1 bis 9 aufweist.
